# EUROPÄISCHE PATENTSCHRIFT

(11) **EP 2 009 317 B1**
(45) Veröffentlichungstag und Bekanntmachung des Hinweises auf die Patenterteilung: **23.12.2009**
(21) Anmeldenummer: 07012852.5
(22) Anmeldetag: 29.06.2007
(51) Int. Cl.: F16D 69/00, F16D 69/02

(54) **Verfahren zur Herstellung eines Reibbelags**
Method for manufacturing a friction lining
Procédé de fabrication d'une garniture de friction

(43) Veröffentlichungstag der Anmeldung: 31.12.2008
(73) Patentinhaber: Hoerbiger Antriebstechnik GmbH, 86956 Schongau (DE)
(72) Erfinder: Fuerguth, Werner, 87640 Biessenhofen/Altdorf (DE)
(74) Vertreter: Kitzhofer, Thomas

(56) Entgegenhaltungen:
- DE-A1- 19 946 706
- FR-A- 1 541 902
- US-A- 3 114 197

## Beschreibung

Die Erfindung betrifft ein Verfahren zur Herstellung eines Reibbelags gemäß Anspruch 1.

Gemäß einem bekannten Herstellungsverfahren werden gewobene Karbonreibbeläge in der Regel in einen metallischen Basiskörper mit kegelstumpfförmiger Ringfläche eingeklebt. Das Einziehen von einer mit gewobenem Karbonbelag beklebten metallischen Trägerfolie ist ebenso möglich. Die Verbindung zwischen Reibbelägträger und Basiskörper wird hierbei in der Regel durch Verschweißen oder Formschluss bzw. Stoffschluss hergestellt.

Streusinterbeläge werden meist auf einen planaren Körper gestreut und gebacken. Anschließend wird durch Umformen ein kegelstumpfförmiger Ring erzeugt. Das Einziehen einer besinterten Metallfolie sowie das Einbringen einer Belagabwicklung durch Stoffschluss oder Formschluss ist ebenfalls möglich.

Weitere Verfahren zur Herstellung von Sinterbelägen sind aus FR 1541902 oder US 3114197 bekannt.

Gewobene Karbonreibbeläge zeichnen sich in der Regel durch eine gute Reibwertcharakteristik aus, haben aber keine Offenporigkeit, die als Ölspeicher dienen kann.

Gewobene Basaltfasern haben ähnliche Eigenschaften bezüglich der Reibcharakteristik wie Karbonfasern und wurden bei im Rahmen der Erfindung durchgeführten Untersuchungen ebenfalls erfolgreich getestet.

Abhängig von der Webstruktur wird das Getriebeöl in den Zwischenräumen der gewobenen Faserstränge oberflächlich gehalten. Zudem wird die durch Reibung entstehende Wärme hauptsächlich längs zur Faserrichtung weitergeleitet. Ein Wärmeübergang in den metallischen Basiskörper ist so nur bedingt möglich.

Streusinterbeläge zeichnen sich durch eine hohe Missbrauchssicherheit aus. Sie können aufgrund ihrer Offenporigkeit Ö1 gut speichern, haben aber in der Regel im Vergleich zu Karbonbelägen etwas niedrigere Reibwerte, sie sind kostengünstiger herstellbar und können Wärme gut abführen.

Es ist daher Aufgabe der vorliegenden Erfindung, ein Verfahren zur Herstellung eines Reibbelages zu schaffen, der die Kombination einer guten Reibwertcharakteristik mit hoher Ölspeicherfähigkeit ermöglicht.

Die Lösung dieser Aufgabe erfolgt durch die Merkmale des Anspruches 1.

Erfindungsgemäß wird die Aufgabe im Einzelnen dadurch gelöst, dass zur Herstellung des Reibbelages zunächst ein gewobenes Fasermaterial auf einen nicht besinterbaren Träger aufgelegt wird.

Anschließend wird eine Streusinterschicht auf zumindest einen Teilbereich des Fasermaterials, vorzugsweise das gesamte Fasermaterial, aufgebracht. Hierbei fließt das feinkörnige Streusintermaterial durch die Maschen bzw. Durchbrüche des gewobenen Fasermaterials bis auf das Material des Trägers.

Während des darauf folgenden Sinterprozesses umschließt das flüssig gewordene Metall der Streusinterschicht das temperaturresistente Fasermaterial und erzeugt dadurch während der darauf folgenden Abkühlphase eine feste formschlüssige Verbindung. Da das Sintermaterial mit dem Träger keine Bindung eingeht, kann der Verbund aus Fasermaterial und Streusinterschicht nach dem Ofendurchlauf und dem Abkühlvorgang leicht vom Träger gelöst werden.

Durch diese Vorgehensweise wird zunächst vorteilhafterweise das Problem der schlechten Benetzbarkeit des Fasermaterials gelöst.

Der auf die zuvor erläuterte Weise hergestellte Reibbelag kann nun beispielsweise zu einem Belagsegment verarbeitet werden, das in den Basisring eingefügt und mittels Stoffschluss zu einer Einheit zur Herstellung eines Reibringes verbunden wird.

Hierbei wurde beispielsweise eine Klebeverbindung bei im Rahmen der Erfindung durchgeführten Untersuchungen mit Erfolg getestet, wobei jedoch andere stoffschlüssige Verbindungsarten wie Löten oder Schweißen ebenfalls in Frage kommen.

Vorteilhafterweise ermöglicht das erfindungsgemäße Verfahren eine Herstellung eines Fasermaterial-Sinter-Reibbelages, der in der Lage ist, bei hervorragender Reibwertcharakteristik Öl gut zu speichern und Wärme gut abzuleiten. Hierdurch werden mit anderen Worten die Vorteile von Fasermaterialien mit denjenigen von Sintermaterialien vereint. Weitere Vorteile sind die Ölunabhängigkeit sowie die erhöhte Leistungsdichte aufgrund der verbesserten Wärmeleitfähigkeit des erfindungsgemäßen Reibbelages.

Die Unteransprüche haben vorteilhafte Weiterbildungen der Erfindung zum Inhalt.

Vorzugsweise wird gewobenes Karbonfasermaterial oder gewobenes Basaltfasermaterial verwendet.

Bei Karbongewebe kommen Materialien mit einer vorzugsweisen Maschenweite von ca. 0,2 bis 6,0 mm in Betracht oder auch ein matrixförmig gelochtes engmaschiges Karbongewebe (Durchmesser von 0,5 mm bis 6 mm).

Als nicht besinterbare Träger werden vorzugsweise Edelstahlträger verwendet.

Es ist ferner möglich, als gewobenen Faserbelag eine Mischung aus Karbonfasern und/oder einer Basaltfaser und aus einer metallischen oder nicht metallischen Komponente zu verwenden, die während des Sintervorganges schmilzt bzw. verbrannt wird.

Ferner ist es möglich, den gesinterten Faserbelag mit einem Harz zu imprägnieren.

## Patentansprüche

1. Verfahren zur Herstellung eines Reibbelags mit folgenden Verfahrensschritten:
- Auflegen eines gewobenen temperaturresistenten Fasermaterials auf einen nicht-besinterbaren Träger,
- Aufbringen einer Streusinterschicht auf zumindestens einen Teilbereich des Fasermaterials;
- Sintern der auf das Fasermaterial aufgebrachten Streusinterschicht;
- Abkühlen der gesinterten Streusinterschicht unter Bildung eines Verbundes zwischen Streusinterschicht und Fasermaterial; und
- Abnehmen des Verbundes vom Träger.

2. Verfahren nach Anspruch 1, **dadurch gekennzeichnet, dass** als gewobenes Fasermaterial ein weitmaschiges Karbongewebe verwendet wird.

3. Verfahren nach Anspruch 1, **dadurch gekennzeichnet, dass** als gewobenes Fasermaterial ein matrixförmig gelochtes engmaschiges Karbongewebe verwendet wird.

4. Verfahren nach Anspruch 1, **dadurch gekennzeichnet, dass** als Fasermaterial ein Basaltfasergewebe verwendet wird.

5. Verfahren nach einem der Ansprüche 1 bis 4, **dadurch gekennzeichnet, dass** das gewobene Fasermaterial eine Maschenweite von 0,2 bis 5 mm aufweist.

6. Verfahren nach einem der Ansprüche 1 bis 5, **dadurch gekennzeichnet, dass** nur einzelne Faserstränge des gewobenen Fasermaterials mit einer Streusinterschicht bestreut werden.

## Claims

1. A method for manufacturing a friction lining, comprising the following method steps:
- applying a woven temperature-resistant fiber material onto a carrier which cannot be sintered,
- applying a scatter sinter layer onto at least a partial portion of the fiber material;
- sintering the scatter sinter layer applied to the fiber material;
- cooling the sintered scatter sinter layer while forming a composite between the scatter sinter layer and fiber material; and
- removing the composite from the carrier.

2. The method of claim 1, **characterized in that** a wide-meshed carbon fabric is used as the woven fiber material.

3. The method of claim 1, **characterized in that** a matrix-shaped perforated close-meshed carbon fabric is used as the woven fiber material.

4. The method of claim 1, **characterized in that** a basalt fiber fabric is used as the fiber material.

5. The method of one of claims 1 to 4, **characterized in that** the woven fiber material has a mesh width between 0.2 and 5 mm.

6. The method of one of claims 1 to 5, **characterized in that** only individual fiber strands of the woven fiber material are sprinkled with a scatter sinter layer.

## Revendications

1. Procédé de fabrication d'une garniture de friction avec les étapes du procédé suivantes :
- application d'un matériau fibreux tissé résistant à la température sur un support non-frittable,
- application d'une couche frittée par dispersion sur au moins une zone partielle du matériau fibreux ;
- frittage de la couche frittée par dispersion appliquée sur le matériau fibreux ;
- refroidissement de la couche frittée par dispersion pendant la formation d'une liaison entre la couche frittée de dispersion et le matériau fibreux ; et
- séparation de la liaison du support.

2. Procédé selon la revendication 1, **caractérisé en ce qu'**un tissu carbone à mailles larges est utilisé comme matériau fibreux tissé.

3. Procédé selon la revendication 1, **caractérisé en ce qu'**un tissu carbone à mailles étroites et percé sous forme matricielle est utilisé comme matériau fibreux tissé.

4. Procédé selon la revendication 1, **caractérisé en ce qu'**un tissu de fibres balsatiques est utilisé comme matériau fibreux tissé.

5. Procédé selon l'une quelconque des revendications 1 à 4, **caractérisé en ce que** le tissu fibreux tissé présente une largeur de mailles de 0,2 à 5 mm.

6. Procédé selon l'une quelconque des revendications 1 à 5, **caractérisé en ce que** seuls quelques segments de fibres individuels du matériau fibreux tissé sont dispersés avec une couche de dispersion frittée.
